# EUROPEAN PATENT SPECIFICATION

(11) **EP 3 722 155 B1**
(45) Date of publication and mention of the grant of the patent: **03.03.2021**
(21) Application number: 19167858.0
(22) Date of filing: 08.04.2019
(51) Int. Cl.: B60R 7/06

(54) **MOTOR VEHICLE COMPRISING A STORAGE COMPARTMENT IN AN INTERIOR TRIM**
KRAFTFAHRZEUG MIT EINEM STAUFACH IN EINER INNENVERKLEIDUNG
VÉHICULE AUTOMOBILE COMPRENANT UN COMPARTIMENT DE STOCKAGE DANS UNE GARNITURE INTÉRIEURE

(43) Date of publication of application: 14.10.2020
(73) Proprietor: Audi AG, 85045 Ingolstadt (DE)
(72) Inventor: Hélot, Jacques, 85051 Ingolstadt (DE); Mertens, Joris, 85051 Ingolstadt (DE)

(56) References cited:
- DE-A1-102005 009 384
- DE-B3-102005 002 577
- FR-A1- 2 746 068
- US-A1- 2002 076 312

## Description

The invention relates to a motor vehicle comprising a storage compartment in an interior trim of said motor vehicle. Said interior trim, or car interior lining, may be a car dashboard or instrument panel, or a door covering or seating buck, or other interior trim.

Especially in piloted or fully automated driven vehicles, amenities like, e.g., storage compartments for food and beverages, play an important role. So far, if a passenger orders an object, e.g., food or beverages or something else, can be delivered by a delivery service, and the object needs be to passed through a car's window. If, for example, no passenger is in the vehicle, some storage compartments may be opened from the exterior, such that said food or other object may be placed into the storage compartment. Such storage compartment can also comprise an additional door or hatch that is located in the inside of the vehicle, such that the storage room is accessible from the passenger compartment.

Some vehicles comprise kitchen appliances, such as an oven, microwave or fridge. Such exemplary storage rooms are described, e.g., in DE 10 2015 005 166 A1, EP 1 458 219 A2, and US 6,060,700 A1.

DE 10 2005 009 384 A1 describes a motor vehicle comprising a loading space provided in the vehicle, whose base contains a loading surface provided with a conveyor element.

A problem, however, is that there is a distance between the access door and the location of where a passenger may pick up said delivered object. Such distance may be up to 30-70 centimeter, if, e.g., the storage compartment is in a dashboard or trunk, and the area where the object is put could possibly not be within reach for a passenger inside the vehicle. If the passenger is inside the vehicle, he/she must either bend over to reach the delivered object, which could be inconvenient. This could be disadvantageous because the passenger could be tempted to open a passenger's door or a window so that the delivery person can reach into the passenger's compartment. It is neither desired that the delivery person can reach into the passenger's compartment if no passenger is present.

One object underlying the invention is the provision of a vehicle with a storage compartment that is more conveniently accessible and more secure.

The object is solved by the motor vehicle of claim 1. Advantageous embodiments of the invention are indicated in the dependent claims.

The invention is based on the idea to implement a carrier system in a storage compartment, said carrier system being constructed/designed to transport an object, e.g., food and/or beverage boxes, to and from one side of the storage compartment to the other side of the storage compartment, for example to transport said object from an exterior door to, e.g., a fridge or microwave located in said storage compartment. Since said storage compartment has a hatch element (which may likewise be called "door element", or "exterior hatch element", or "exterior hatch"). A delivery person may thus open said hatch element and put the object into the storage compartment, such that a window or passenger's door of the car need not be opened. Thus, a safe delivery system is provided.

The inventive motor vehicle comprises a storage compartment in an interior trim of said motor vehicle, for example in a dashboard, seating buck, and/or passenger's door. Said storage compartment comprises a hatch element that is disposed at the side panel of a first area of the storage compartment, said first element connecting the first area of the storage compartment to the exterior of the motor vehicle. In other words, the storage compartment is accessible from the exterior by opening said hatch element. The hatch element may, by way of example, be constructed as a door, hatch or lid. The hatch element may, for example, be part of the automotive body shell.

Said storage compartment also comprises an access element that is disposed at a panel of a second area of the storage compartment, for example a front panel, said access hatch element connecting the second area of the storage compartment with the passenger compartment of said motor vehicle. In other words, the storage compartment is accessible from the passenger compartment through said access element. An access element is defined as a component or constructional element that is constructed/designed to provide access to the storage compartment, and may, by way of example, be a hatch, door, or opening.

Said motor vehicle also comprises a conveyor element, which may likewise be called "carrier element", "transport element", "carrier" or "conveyor", wherein said conveyor element is arranged in the storage compartment and wherein the conveyor element extends from the first area to the second area of the compartment. Also, said conveyor element is constructed to transport an object from one of said areas to the other of said areas. In other words, the conveyor element may transport the object from the first area to the second area, and/or from the second area to the first area. In an example, the conveyor element may transport a food box, that was dropped by a delivery person into the first area, to the second area, and later the empty box or the box with non-eaten food or garbage back to the first area so that a pick-up service may pick up the empty box and/or the non-eaten food or garbage.

A conveyor element is defined as a device, assembly group or constructional element that is designed and constructed to transport said object in, e.g., a mechanical, electrical or other way, along its extension. For example, said conveyor element may comprise a transport mechanism with rails and/or a cable pull.

The motor vehicle comprises a divider element for at least partially separating the first area from the second area of the storage compartment.

The above-mentioned advantages are enabled, and the above-mentioned disadvantages are reduced or even fully overcome. Another advantage is that an object may be securely delivered even if no passenger is in the motor vehicle. Also, the object is protected against thefts, and better hygienic conditions are provided. By separating the two areas, the process of delivering the object is more secure, since someone from the delivery service may not reach into the entire storage compartment and can thus not reach into the passenger compartment. Also, if, e.g., it is very cold outside but the first area of the storage compartment is heated to keep delivered food warm, an efficient insulation for preventing the first area of the storage compartment from cooling down is provided.

Preferably, said motor vehicle may comprise a control unit or controller that is constructed to receive a sensor signal describing an opening and/or closing of said hatch element on the vehicle's exterior, and to activate said conveyor element in response to said received sensor signal, thereby activating conveyor element. For example, a sensor for sensing the opening and/or closing of the hatch element may be arranged at said exemplary exterior hatch, and whenever it is sensed that said hatch element is opened and/or closed, the conveyor element may automatically be activated said transport mechanism to transport the object to the second storage area. Thus, a passenger may easily have access to said object from the passenger's compartment. Advantageously, a passenger does not have to operate said conveyor element by himself or herself. If there is no passenger in the vehicle when the object is delivered by being dropped into the first area, the object may, for example, automatically be transported to the second area that is easily accessible for a passenger whenever the passenger has entered the vehicle. Thus, the passenger does not have to search the storage compartment for the delivered object. Also, if there's, e.g., a fridge or oven in the second area, the object is transported into said exemplary fridge or oven and can be cooled or kept warm until the user of the vehicle returns. If, however, the first area has a device or else to cool food and/or beverages, said exemplary food and/or beverages may remain in the first area until the passenger arrives.

Preferably, the motor vehicle may be constructed to determine and/or register if the object needs to be cooled and/or heated, or not. For this purpose, the motor vehicle may optionally comprise a detection system to determine if the object needs to be cooled and/or heated, preferably including a camera and/or a scanner for scanning the object and/or a carrier on which the object is placed. For example, a barcode printed onto the object or the carrier, or a contour of the object may be detected/scanned. Alternatively, the motor vehicle may receive an information signal describing the object and/or its properties and requirements, whereby said information signal may preferably be received from an app that may be installed on a mobile device. The motor vehicle is thus constructed to manage both the object's transport and cooking accordingly.

Several constructions and arrangements of the conveyor element have been proven to be particularly advantageous to achieve the aforementioned advantages over others. One advantageous construction is designed so that said conveyor element comprises a conveyor belt. Alternatively or additionally, said conveyor element may comprise at least one sliding rod, on which, for example, a tray on which the object may be placed and be transported from one area to the other area. A third variant may, as an alternative to the previous variant or an addition to the previous variant, comprise that said conveyor element comprises a cable pull.

Preferably, the conveyor element may also comprise a carrier element for receiving said object for transportation, preferably a carrier on wheels, a tray or a box. Using such carrier element, the object may be transported in a more reliable way, and, e.g., spilling of liquids does not result in the storage compartment as such getting wet or dirty.

Said conveyor element may in an exemplary embodiment be constructed to transport said object in a curved movement or linear movement or a combination thereof. If the conveyor element is constructed to transport said object in a curved movement, an installation space within the interior trim may be used more efficiently, since a storage compartment extending from, e.g., a door panel to the dashboard may be implemented. This allows that the access for the delivery person to the storage compartment from the vehicle's exterior may be arranged at a place that is easily accessible for the delivery person, for example next to a passenger's door or at a deck lid. At the same time, the access for the passenger to reach into the storage compartment from the vehicle's interior may be placed at a site convenient for the passenger, e.g., in a dashboard or in a center console. In other words, more degrees of freedom are provided in designing the construction of the storage compartment in relation to the arrangement of the hatch element. A construction of the conveyor element in a curved manner thus also provides a very good handling of the object, as well as a very good reachability.

In another embodiment of the inventive motor vehicle, said conveyor element may be constructed to transport said object in a non-planar movement if, for example, the first area is on a lower level than the second area. Such conveyor element may, for example, comprise a hydraulic system or a similar system. This embodiment also provides more degrees of freedom with respect to the design and construction of the motor vehicle.

According to another embodiment of the inventive motor vehicle, said divider element is constructed to be repositioned by sliding. In other words, the divider element may preferably be designed as a sliding door.

Preferably, said motor vehicle may comprise a kitchen appliance in one of the areas of the storage compartment, preferably a fridge and/or oven and/or microwave, in the first area of the storage compartment, preferably wherein said conveyor element extends to said kitchen appliance to transport said object to and/or into said kitchen appliance. Said amenities provide a high degree of comfort, especially in piloted or fully autonomous driven vehicles.

The hatch element, i.e. the hatch element at the vehicle's exterior, may optionally be flush with a clearance between a frame of the passenger's door and the passenger's door leaf of said motor vehicle. That way, an amount of gaps or grooves is minimized, and said first hatch element is arranged in a very space-saving manner.

The motor vehicle of the invention may preferably be designed/constructed as a passenger vehicle, bus or truck.

Further advantages, features, and details of the present invention derive from the following description of a preferred embodiment as well as from the drawings. The features and feature combinations previously mentioned in the description as well as the features and feature combinations mentioned in the following description of the figures and/or shown in the figures alone may be employed not only in the respectively indicated combination but also in any other combination or taken alone without leaving the scope of the invention.

In the following, examples of the invention are described. The figures show in:
- Fig. 1: a schematic illustration of a preferred embodiment of the motor vehicle in a front-perspective view described herein,
- Fig. 2: a schematic three-dimensional illustration of the example of Fig. 1,
- Fig. 3: a schematic illustration of a further preferred embodiment of the motor vehicle described herein in a top view,
- Fig. 4: a schematic illustration of a further preferred embodiment of the motor vehicle described herein in a side view,
- Fig. 5: a schematic three-dimensional illustration of a preferred embodiment of the conveyor element described herein,
- Fig. 6: a schematic three-dimensional illustration of a further preferred embodiment of the conveyor element described herein, and
- Fig. 7: a schematic three-dimensional illustration of a further preferred embodiment of the conveyor element described herein.

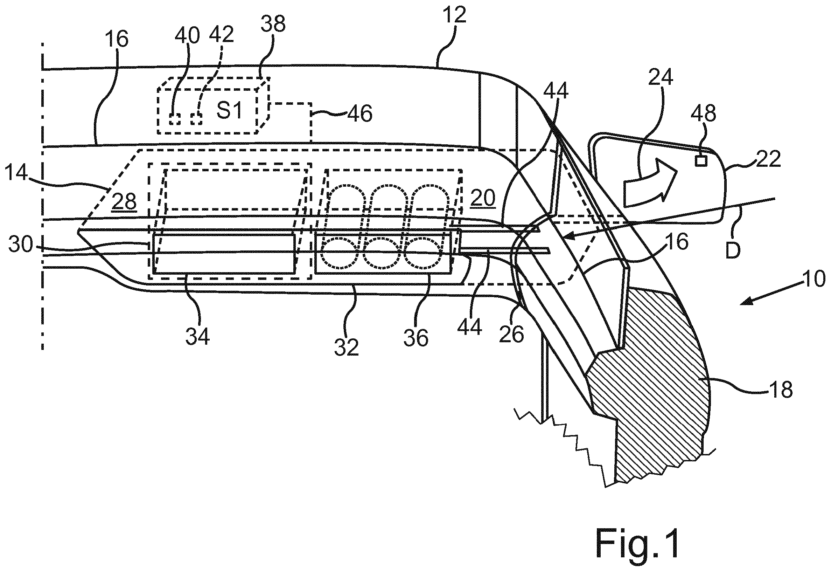

Fig. 1 exemplifies the concept of a motor vehicle 10 which, preferably, may be constructed as a passenger vehicle. Alternatively, said motor vehicle 10 may be constructed as a truck or a van. Preferably, said motor vehicle 10 may be a motor vehicle 10 that may be controlled in a piloted and/or autonomous driving mode.

Exemplarily, said motor vehicle 10 of Fig. 1 may optionally have a wrap-around display 12 which may encircle a front area of an in-cabin room of said motor vehicle 10. Said display 12 is an optional feature and may preferably be constructed as a T-OLED display ("transparent organic light emitting diode display"). However, the display technology does not affect the carrier system as described below, which is why any other known display may be implemented, or why motor vehicle 10 not necessarily needs a display.

Said motor vehicle 10 comprises a storage compartment 14 which may, preferably, be located in a dashboard of said motor vehicle 10, or in a laterally located interior trim 16 of said motor vehicle 10, for example an interior trim 16 which is located at a passenger's door 18 and/or a lateral side of said dashboard. Interior trim 16 may alternatively be a central console of motor vehicle 10, or the storage compartment 14 may be located in, for example, a C-column.

A first area 20 of said storage compartment 14 is accessible from the exterior of said motor vehicle 10 by a hatch element 22, said first hatch element 22 exemplarily being constructed as a hatch or a small sliding door. In a preferred example, said hatch element 22 may be flush with a clearance or door gap 26. The hatch element 22 may alternatively be located in a fender of motor vehicle 10 or in or near an engine hood or rear deck. In the example of Fig. 1, said hatch element 22 is pictured in an open position.

The process of opening said hatch element 22 is depicted by arrow 24. The opening of the hatch element 22 may be initialized by, e.g., pushing a respective button or similar construction to initiate said function, or, automatically, if exemplarily a sensor on the exterior of vehicle 10 senses a person or hand approaching said hatch element 22. Optionally, a digital key, for example a QR-code on a portable phone, may be needed to unlock the hatch element 22. If, for example, a delivery person brings, for example, food and/or beverages in box(es), said hatch element 22 may be opened and said food and/or beverages box(es) may be dropped into the first area 20 of the storage compartment 14. The inserting said food and/or beverages into said first area 20 of the storage compartment 14 is depicted by arrow D.

The exemplary storage compartment 14 of Fig. 1 shows a second area 28, where optionally a kitchen appliance 30 may be arranged. Said optional kitchen appliance 30 may, for example, be a fridge and/or a microwave and/or an oven, which, for example, may optionally be open on the side facing the first area 20, or which may optionally comprise a small door or hatch so that, for example, a food box may be inserted.

Fig. 1 shows an access element 32 which may, for example, be an opening, a hatch or a porthole so that a person inside the motor vehicle 10 can reach into the second area 28 for, e.g., grasping an exemplary food box 34. Said exemplary food box 34 may in the example of Fig. 1 be located in the optional kitchen appliance 30, and optionally a beverage box 36 containing three cans of a beverage may be located in an area of second area 28 which is still accessible through the access element 32.

Preferably, motor vehicle 10 may also comprise a control unit 38 which may be located anywhere in said motor vehicle 10, for example close to or in the storage compartment 14, for example in said dashboard or central console. The optional control unit 38 may exemplarily be constructed as a control device, controller or processor. Control unit 38 may optionally comprise a storage 40 and/or a processor 42 and/or a microcontroller. Said control unit 38 may be connected to a conveyor element 44 via a wire-bound or wireless data communication link 46. In the example of Fig. 1, the conveyor element 44 may exemplarily comprise rods to guide the food box 34 and the beverage box 36. The data communication link 46 for controlling said conveyor element 44 may exemplary constructed as a wire or data bus, or a WiFi- or Bluetooth connection.

In one example, the motor vehicle 10 may optionally comprise a sensor 48 which exemplarily may be located in the inside or outside of the hatch element 22. Said sensor 48 may detect an opening and/or closing of said hatch element 22, or an approaching hand of the delivery person, and provide a corresponding sensor signal, and transmit the same to the control unit 38. Alternatively, or as an additional sensor 48, sensor 48 may be located on the conveyor element 44 to detect a weight of an object or an object which is put on or at said conveyor element 44 and be constructed to sense a weight or change in weight.

If, for example, the delivery person opens and/or closes hatch element 22, control unit 38 may, in response to a corresponding sensor signal, activate conveyor element 44 (method step S1) transport the exemplary food box 34 (and/or the exemplary beverage box 36) from the first area 20 to second area 28 of the storage compartment 14.

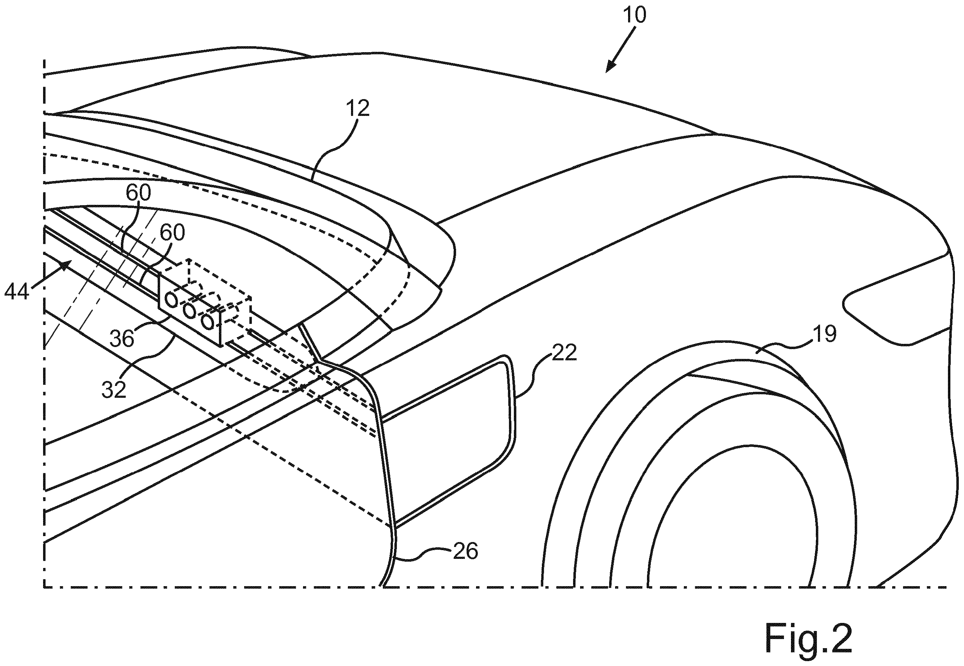

Fig. 2 shows the example of Fig. 1 in a three-dimensional illustration. Fig. 2 thereby shows the exemplary location of hatch element 22 at the clearance of door 18 and close to a front fender 19.

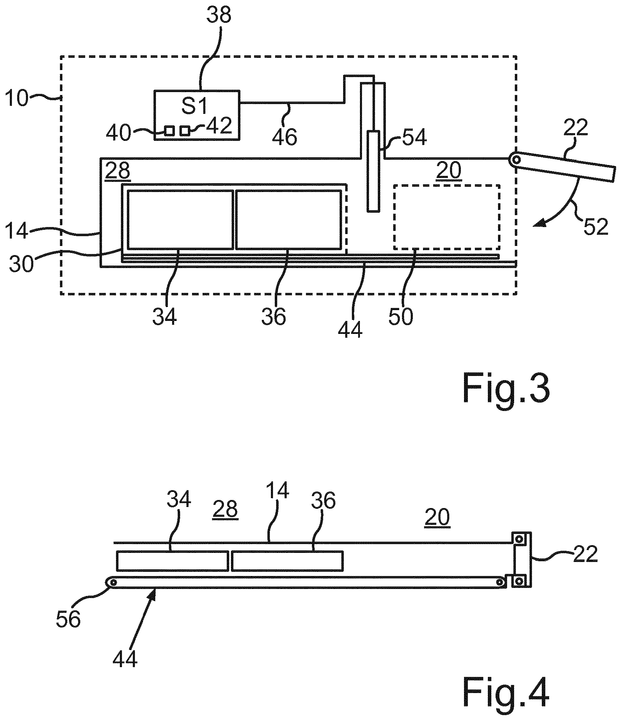

Fig. 3 exemplifies another embodiment, according to which hatch element 22 may be designed as a door to the exterior of motor vehicle 10. Motor vehicle 10 of Fig. 3 may optionally be the one of Fig. 1, with the following differences described for Fig. 3.

The exemplary food box 34 and/or said exemplary beverage box 36 may be received in space 50 when hatch element 22 is open. Arrow 52 indicates the closing of hatch element 22.

The storage compartment 14 of Fig. 3 may comprise an optional divider element 54, said divider element 54 preferably being constructed as a sliding door or hatch. Divider element 54 is arranged to at least partially separate the first area 20 from the second area 28 if needed, for example before and when the delivery person drops the object into the first area 20. For example, upon or after closing (52) of hatch element 22, said divider element 54 may be controlled by control unit 38 to open, such that the conveyor element 44 may transport the object from the first area 20 to the second area 28. Said exemplary sliding door may optionally be opened and/or closed after scanning a code on the delivered object.

For example, conveyor element 44 may be a conveyor belt, for example an electrically driven conveyor belt, or may comprise a conveyor belt or other mechanism for transport. Said space 50 for receiving the object to be transported from the first area 20 to the second area 28 may also be indicated as delivery platform.

Fig. 4, Fig. 5, Fig. 6 and Fig. 7 each show an example of an exemplary conveyor element 44. In Fig. 4, hatch element 22 is closed, and the exemplary food box 34 and the exemplary beverage box 36 have already been transported to the second area 28. Conveyor element 44 may comprise or may be constructed as a conveyor belt 56 which is constructed and arranged to transport said boxes 34, 36 from one area to the other. Said conveyor belt 56 may be driven and/or controlled by the optional control unit 38.

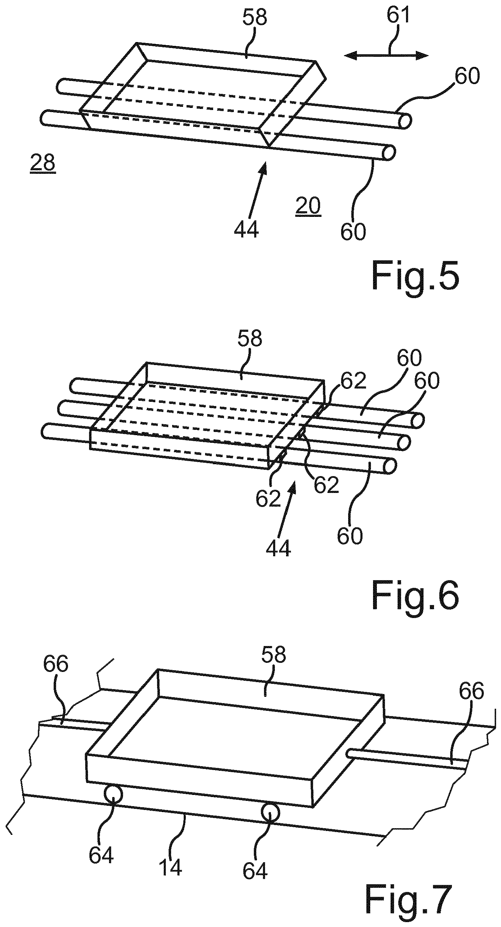

Fig. 5 depicts a conveyor element 44 which may comprise one or more rods 60, preferably sliding rods 60. The delivered food may optionally be received by a carrier 58, wherein said optional carrier 58 may be a tray, a bowl or a box. As indicated by arrow 61, said optional carrier 58 may be driven or pulled or pushed or moved in a different manner from one area to the other. Moving said carrier 58 may preferably be done electrically or mechanically, for example using ropes attached to said carrier 58, or using a cable pull.

Said optional carrier 58 may alternatively (or additionally) be mechanically or electrically moved as depicted in Fig. 6, wherein exemplarily carrier element 58 may comprise skids 62 that are placed on a lower surface of said exemplary rods 60. Said skids 62 may preferably be made of or comprise polyoxymethylene (POM, also known as acetal, polyacetal or polyformaldehyde), which is an engineering thermoplastic that has very good sliding properties.

As shown in Fig. 7, carrier element 58 may optionally have wheels 64, and said carrier element 58 may, e.g., be driven or pulled (or pushed) on either rods 60 (not shown in Fig. 7) or on a surface, for example on a bottom panel of storage compartment 14. Conveyor element 44 may then comprise, for example, ropes 66 which may be attached to carrier element 58 in order to pull said carrier element 58, and an electric mechanism to pull said carrier element 58.

In another example, storage compartment 14 may extend in a linear manner, and in another example storage compartment 14 may extend in a curved or non-planar manner. If, for example, the second area 28 with the access element 32 is located in the central console of motor vehicle 10, and if the first area 20 is located in a front door of motor vehicle 10 having hatch element 22 at the exterior of said door, the interior of the storage compartment 14 may be curved from the side door to the central console. That way, it is more convenient for a passenger to pick up the object.

Altogether, the examples show how the invention provides a carrier or carrier system for an object, e.g., food and/or beverages, from an exterior of a motor vehicle 10 to, e.g., a fridge and/or microwave in, for example, a dashboard.

The idea is to have a carrier system, i.e. a conveyor element 44, that may exemplary transport food and/or beverage box(es) 34, 36 to and/or from the exemplary fridge/microwave.

This may, for example, be done with a conveyor belt 56, and/or a carrier element 58 on sliding rods 60 or surface, and/or a carrier element 58 on wheels.

The movement of the exemplary carrier element 58 may be automatic after opening and/or closing the access element 32, e.g. a hatch or a door, or by a knob or app.

The movement may be linear or describe a curve. The movement may, alternatively or additionally, be non-planar.

The exemplary fridge and/or microwave may be secured by, e.g., an internal door that closes off this area from the delivery platform. Advantageously, the object, i.e., e.g., a food box 34 and/or a beverage box 36, is protected against thefts, and a better hygiene is enabled.

Advantageously, there can be a distance between the delivery location and the optional fridge/microwave, or the second area 28, respectively. The delivering person does not have to reach far in the motor vehicle 10, e.g. in the car. The optional kitchen appliance 30, e.g. a fridge and/or microwave, does not have to be up close to the opening in the exterior. The exemplary fridge and/or microwave may be secured by a divider element 54, for example an internal door, that may close off this area from the delivery platform (prevents theft / enhances hygiene).

Said exemplary sliding door may optionally be opened and/or closed after scanning a code on the delivered object.

## Claims

1. Motor vehicle (10) comprising a storage compartment (14) in an interior trim (16) of said motor vehicle (10), whereby said storage compartment (14) comprises:
- a hatch element (22) that is disposed at a side panel of a first area (20) of the storage compartment (14), said hatch element (22) connecting the first area (20) of the storage compartment (14) with the exterior of the motor vehicle (10); and
- an access element that is disposed at a panel of a second area (28) of the storage compartment (14), said access element connecting the second area (28) of the storage compartment (14) with a passenger compartment of the motor vehicle (10);
wherein the motor vehicle (10) comprises:
- a conveyor element (44) arranged in the storage compartment (14), wherein said conveyor element (44) extends from the first area (20) to the second area (28) of the storage compartment (14), and wherein said conveyor element (44) is constructed to transport an object from one of said areas (20, 28) to the other of said areas (20, 28);
wherein the motor vehicle (10) is **characterized by** a divider element (54) for at least partially separating the first area (20) from the second area (28) of the storage compartment (14).

2. Motor vehicle (10) according to claim 1, comprising:
- a control unit (38) that is constructed to receive a sensor signal describing an opening and/or closing of said hatch element (22) and/or said access element (32), and to activate said conveyor element (44) in response to said received sensor signal, thereby activating said conveyor element (44).

3. Motor vehicle (10) according to any one of the preceding claims, wherein said conveyor element (44) comprises a conveyor belt (56).

4. Motor vehicle (10) according to any one of the preceding claims, wherein said conveyor element (44) comprises at least one sliding rod (60).

5. Motor vehicle (10) according to any one of the preceding claims, wherein said conveyor element (44) comprises a cable pull.

6. Motor vehicle (10) according to any one of the preceding claims, whereby said conveyor element (44) comprises a carrier element (58) for receiving said object for transportation, preferably a carrier on wheels, a tray or a box.

7. Motor vehicle (10) according to any one of the preceding claims, whereby said conveyor element (44) is constructed to transport said object in a curved movement.

8. Motor vehicle (10) according to any one of the preceding claims, whereby said conveyor element (44) is constructed to transport said object in a non-planar movement.

9. Motor vehicle (10) according to any one of the preceding claims,
-,
wherein said divider element (54) is constructed to be repositioned by sliding.

10. Motor vehicle (10) according to any one of the preceding claims, comprising:
- a kitchen appliance (30) in one of the areas of the storage compartment, preferably a fridge and/or oven, in one of the areas (20, 28) of the storage compartment (14), preferably whereby said conveyor element (44) extends to said kitchen appliance (30) for transporting said object to and/or into said kitchen appliance (30).

11. Motor vehicle (10) according to any one of the preceding claims, whereby said hatch element (22) is flush with a clearance between a door frame and a door leaf of said motor vehicle (10).

## Patentansprüche

1. Kraftfahrzeug (10), umfassend ein Staufach (14) in einer Innenverkleidung (16) des Kraftfahrzeugs (10), wobei das Staufach (14) umfasst:
- ein Klappenelement (22), das an einer Seitenverkleidung eines ersten Bereichs (20) des Staufachs (14) angeordnet ist, wobei das Klappenelement (22) den ersten Bereich (20) des Staufachs (14) mit der Außenseite des Kraftfahrzeugs (10) verbindet; und
- ein Zugangselement, das an einer Verkleidung eines zweiten Bereichs (28) des Staufachs (14) angeordnet ist, wobei das Zugangselement den zweiten Bereich (28) des Staufachs (14) mit einem Fahrgastraum des Kraftfahrzeugs (10) verbindet;
wobei das Kraftfahrzeug (10) umfasst:
- ein Förderelement (44), das in dem Staufach (14) angeordnet ist, wobei sich das Förderelement (44) von dem ersten Bereich (20) zu dem zweiten Bereich (28) des Staufachs (14) erstreckt, und wobei das Förderelement (44) aufgebaut ist, um einen Gegenstand von einem der Bereiche (20, 28) zu dem anderen der Bereiche (20, 28) zu transportieren;
wobei das Kraftfahrzeug (10) **gekennzeichnet ist durch**
ein Trennelement (54) zum zumindest teilweisen Trennen des ersten Bereichs (20) vom zweiten Bereich (28) des Staufachs (14).

2. Kraftfahrzeug (10) nach Anspruch 1, umfassend:
- eine Steuereinheit (38), die aufgebaut ist, um ein Sensorsignal zu empfangen, das ein Öffnen und/oder Schließen des Klappenelements (22) und/oder des Zugangselements (32) beschreibt, und um das Förderelement (44) als Reaktion auf das empfangene Sensorsignal zu aktivieren, wodurch das Förderelement (44) aktiviert wird.

3. Kraftfahrzeug (10) nach einem der vorstehenden Ansprüche, wobei das Förderelement (44) ein Förderband (56) umfasst.

4. Kraftfahrzeug (10) nach einem der vorstehenden Ansprüche, wobei das Förderelement (44) mindestens eine Verschiebestange (60) umfasst.

5. Kraftfahrzeug (10) nach einem der vorstehenden Ansprüche, wobei das Förderelement (44) einen Seilzug umfasst.

6. Kraftfahrzeug (10) nach einem der vorstehenden Ansprüche, wobei das Förderelement (44) ein Trägerelement (58) zur Aufnahme des Transportgegenstandes, bevorzugt einen Träger auf Rädern, eine Schale oder eine Box, umfasst.

7. Kraftfahrzeug (10) nach einem der vorstehenden Ansprüche, wobei das Förderelement (44) aufgebaut ist, um den Gegenstand in einer bogenförmigen Bewegung zu transportieren.

8. Kraftfahrzeug (10) nach einem der vorstehenden Ansprüche, wobei das Förderelement (44) aufgebaut ist, um den Gegenstand in einer nicht ebenen Bewegung zu transportieren.

9. Kraftfahrzeug (10) nach einem der vorstehenden Ansprüche, -,
wobei das Trennelement (54) aufgebaut, um durch Verschieben umpositioniert werden zu können.

10. Kraftfahrzeug (10) nach einem der vorstehenden Ansprüche, umfassend:
- ein Küchengerät (30) in einem der Bereiche (20, 28) des Staufachs (14), bevorzugt einen Kühlschrank und/oder einen Ofen, wobei sich das Förderelement (44) bevorzugt zu dem Küchengerät (30) erstreckt, um den Gegenstand zu dem und/oder in das Küchengerät (30) hinein zu transportieren.

11. Kraftfahrzeug (10) nach einem der vorstehenden Ansprüche, wobei das Klappenelement (22) mit einem Zwischenraum zwischen einem Türrahmen und einem Türblatt des Kraftfahrzeugs (10) bündig ist.

## Revendications

1. Véhicule motorisé (10) comprenant un compartiment de rangement (14) dans une garniture intérieure (16) dudit véhicule motorisé (10), dans lequel ledit compartiment de rangement (14) comprend :
- un élément de trappe (22) qui est disposé au niveau d'un panneau latéral d'une première zone (20) du compartiment de rangement (14), ledit élément de trappe (22) reliant la première zone (20) du compartiment de rangement (14) à l'extérieur du véhicule motorisé (10) ; et
- un élément d'accès qui est disposé au niveau d'un panneau d'une seconde zone (28) du compartiment de rangement (14), ledit élément d'accès reliant la seconde zone (28) du compartiment de rangement (14) à un compartiment passager du véhicule motorisé (10) ;
dans lequel le véhicule motorisé (10) comprend :
- un élément transporteur (44) agencé dans le compartiment de rangement (14), dans lequel ledit élément transporteur (44) s'étend depuis la première zone (20) jusqu'à la seconde zone (28) du compartiment de rangement (14), et dans lequel ledit élément transporteur (44) est conçu pour transporter un objet depuis l'une desdites zones (20, 28) jusqu'à l'autre desdites zones (20, 28) ;
dans lequel le véhicule motorisé (10) est **caractérisé par**
un élément diviseur (54) pour séparer au moins partiellement la première zone (20) de la seconde zone (28) du compartiment de rangement (14).

2. Véhicule motorisé (10) selon la revendication 1, comprenant :
- une unité de commande (38) qui est conçue pour recevoir un signal de capteur décrivant une ouverture et/ou une fermeture dudit élément de trappe (22) et/ou dudit élément d'accès (32), et pour activer ledit élément transporteur (44) en réponse audit signal de capteur reçu, en activant de ce fait ledit élément transporteur (44).

3. Véhicule motorisé (10) selon l'une quelconque des revendications précédentes, dans lequel ledit élément transporteur (44) comprend une bande transporteuse (56).

4. Véhicule motorisé (10) selon l'une quelconque des revendications précédentes, dans lequel ledit élément transporteur (44) comprend au moins une tige coulissante (60).

5. Véhicule motorisé (10) selon l'une quelconque des revendications précédentes, dans lequel ledit élément transporteur (44) comprend un câble de traction.

6. Véhicule motorisé (10) selon l'une quelconque des revendications précédentes, dans lequel ledit élément transporteur (44) comprend un élément porteur (58) pour recevoir ledit objet à transporter, de préférence un porteur sur roues, un plateau ou une boîte.

7. Véhicule motorisé (10) selon l'une quelconque des revendications précédentes, dans lequel ledit élément transporteur (44) est conçu pour transporter ledit objet dans un mouvement incurvé.

8. Véhicule motorisé (10) selon l'une quelconque des revendications précédentes, dans lequel ledit élément transporteur (44) est conçu pour transporter ledit objet dans un mouvement non planaire.

9. Véhicule motorisé (10) selon l'une quelconque des revendications précédentes,
-,
dans lequel ledit élément diviseur (54) est conçu pour être repositionné en coulissant.

10. Véhicule motorisé (10) selon l'une quelconque des revendications précédentes, comprenant :
- un appareil de cuisine (30) dans l'une des zones du compartiment de rangement, de préférence un frigo et/ou un four, dans l'une des zones (20, 28) du compartiment de rangement (14), de préférence de telle manière que ledit élément transporteur (44) s'étende jusqu'audit appareil de cuisine (30) pour transporter ledit objet jusqu'audit et/ou dans ledit appareil de cuisine (30).

11. Véhicule motorisé (10) selon l'une quelconque des revendications précédentes, dans lequel ledit élément de trappe (22) affleure avec un dégagement entre un cadre de porte et un ouvrant dudit véhicule motorisé (10).
